# EUROPEAN PATENT APPLICATION

(11) **EP 4 183 898 A1**
(43) Date of publication of application: **24.05.2023**
(21) Application number: 21209518.6
(22) Date of filing: 22.11.2021
(51) Int. Cl.: C25B 1/04, F03D 9/19

(54) **METHOD OF ASSEMBLING AN OFFSHORE ELECTROLYSER ARRAY**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

The invention describes a method of assembling an offshore electrolyser array (2), which method comprises the steps of constructing a support frame (IF) to receive a plurality of units (20) of the electrolyser array (2); mounting the units (20) onto the support frame (IF) to obtain a pre-assembled array (12); transporting the pre-assembled array (12) to its offshore destination (3); and lifting the pre-assembled array (12) into place at the offshore destination (3).

## Description

### Background

An offshore wind turbine can be used to provide electric power directly to one or more electrolysis modules in order to produce "green" hydrogen. A large capacity wind turbine can power an array of multiple electrolysis modules. The electrolysis modules can be arranged on a platform at the transition between wind turbine tower and an offshore supporting structure such as a monopile. Such a platform is generally some distance above sea-level, so that it is necessary to hoist the electrolysis modules into place during an installation procedure. This requires specialist lifting equipment on account of the weight of an electrolysis module. For example, an electrolysis module provided in a container the size of a standard shipping container can have a weight in the order of several tonnes and may require a large crane to lift it from an installation vessel to the height of the platform. A large offshore wind-to-hydrogen plant may comprise several such modules. The cost of installation is therefore very high, since each lifting procedure can take several hours, and can only be performed in stable weather conditions.

It is therefore an object of the invention to provide an improved way of installing an offshore electrolysis array.

This object is achieved by the claimed method of assembling an offshore electrolyser array, by the claimed array assembly toolkit, and by the claimed offshore wind turbine.

### Description

According to the invention, the method of assembling an offshore electrolyser array comprises the steps of constructing a support frame to receive a plurality of units of the electrolyser array; mounting the units onto the support frame to obtain a pre-assembled array; transporting the pre-assembled array to the offshore destination; and lifting the pre-assembled array onto a platform at the offshore destination.

The offshore electrolyser array may be assumed to comprise multiple units, for example four or more units, and the inventive method may also be referred to as a method of installing multiple units of an offshore electrolyser array. The terms "pre-assembled array" and "pre-assembled electrolyser" may be used interchangeably. An advantage of the inventive method is that it can greatly reduce the cost of installing an offshore electrolyser array. Instead of having to lift each electrolyser array unit into place on the platform, the entire assembly is prepared previously and lifted in a single lifting manoeuvre. The need for human intervention at platform level during the hazardous installation procedure can be reduced or even eliminated altogether.

According to the invention, the array assembly toolkit comprises a support frame adapted to receive a plurality of units of an electrolyser array. The inventive array assembly toolkit can further comprise a number of unit guides, wherein a unit guide is shaped to receive a suspended electrolyser array unit and to guide that electrolyser array unit to its position on the support frame, i.e. to its intended footprint within the support frame. Alternatively or in addition, the inventive array assembly toolkit can further comprise a number of frame guides, wherein a frame guide is shaped to receive a suspended support frame and to guide that support frame to its position at the installation site of the electrolyser array, i.e. to its intended footprint at the installation site.

An advantage of the inventive array assembly toolkit is that it provides a means of quickly assembling an electrolyser array from several electrolyser array units, so that the resulting pre-assembly can be transported to an installation site. The unit guides ensure ease of positioning of the electrolyser array units onto the support frame, while the frame guides ensure ease of positioning of the pre-assembly onto a level surface at the installation site.

According to the invention, the offshore wind turbine comprises a tower mounted on an offshore support structure such as a monopile or other suitable support structure; a platform at the junction of tower and support structure; and a pre-assembled array of electrolyser units installed using the inventive method. The support frame of the pre-assembled array is secured to the platform of the offshore wind turbine. The platform is adapted to comprise a mounting interface for a set of frame guides, so that the frame guides can be secured to the platform to define the desired footprint of a pre-assembled array of electrolyser units.

Electric power generated by the wind power plant is used to drive the electrolyser array located at the base of the offshore wind turbine tower. In this way, the fully integrated offshore wind-to-hydrogen plant is able to produce "green" hydrogen. The invention is particularly suited to offshore wind turbines with multi-megawatt capacity, since electrolysis of water is power-intensive.

An advantage of the inventive offshore wind turbine is that its platform can be prepared with a view to rapid installation of an electrolyser array. Instead of having to lift each electrolyser unit separately to the platform, an entire electrolyser array can be lifted into place in a single manoeuvre and lowered onto the frame guides premounted on the platform. A suitable crane for this procedure might be the type of crane used to hoist a generator to the height of the tower, for example. A wind turbine installation vessel is generally equipped with such a crane. Upon completion of installation, the electrolyser array is securely fastened to the platform by means of the frame guides and can withstand high forces from wind and waves in storm conditions.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that each unit of the electrolysis array comprises one or more PEM modules, i.e. modules that perform polymer electrolyte membrane electrolysis.

The units of the electrolyser array are preferably mounted onto the support frame at a pre-assembly site, for example in an onshore facility. This can be in a factory setting, for example. Alternatively, a support frame can be arranged on the deck of an installation vessel, and the completed individual electrolyser units can be lowered into place directly onto the support frame. In this case, the pre-assembly site is the deck of the installation vessel. This approach can reduce the overall time needed to assemble an array in readiness for transport to the offshore installation site.

In a preferred embodiment of the invention, a unit of the electrolyser array comprises one or more electrolyser modules arranged in a container. For example, a single container can be a complete electrolysis module comprising a desalination and water management module, an electrolyser for hydrogen production, a step-up transformer; a bus-bar and switch gear, etc. Preferably, the container used to house the electrolyser components is a standard shipping container, for example an ISO-standard international shipping container.

In a preferred embodiment of the invention, the installation guide on the wind turbine platform comprises at least two frame guides , preferably four. In a preferred embodiment of the invention, each frame guide is shaped to receive a corner of the support frame, and the installation guide can comprise a frame guide for each corner of the support frame. Alternatively or in addition, each frame guide is shaped to receive one side of the support frame, and the installation guide can comprise a frame guide for each side of the support frame. In a particularly preferred embodiment of the invention, a frame guide is constructed as a robust block with at least one surface that slopes downward and inward, and is arranged so that the lower edge of a sloped surface - when viewed from above - appears to lie on a corresponding section of the intended footprint of the support frame. During the lowering procedure, any misalignment of the pre-assembly with the intended footprint is corrected by the frame guides, since their sloping surfaces will "nudge" the support frame towards its correct position over its intended footprint.

As the pre-assembly is lowered into place, the frame guides "catch" the support frame and nudge it towards its correct position. Once the pre-assembly makes contact with the platform, therefore, it is already perfectly aligned in its intended position, so that further adjustments to its position are not necessary, and the crane can immediately be detached from the pre-assembly. The installation vessel is then no longer required.

As indicated above, the platform is previously prepared to comprise a mounting interface with which a set of frame guides can be secured to the platform in order to define the desired footprint of the pre-assembled array. For example, a twistlock element may be set into the platform, flush with its upper surface, to engage with a corresponding twistlock element of a frame guide.

Preferably, the platform of the offshore wind turbine is also equipped with a frame locking means that is adapted to engage with a corresponding feature of the support frame. In a particularly preferred embodiment of the invention, such a frame locking means is realised to engage automatically with the support frame. For example, the weight of the pre-assembly can activate the locking mechanism. Alternatively, the locking mechanism may be actuated from a remote control module operated by a technician at a safe location. The precise alignment of the pre-assembly (using the frame guides) ensures that a locking mechanism will not be damaged or inadvertently actuated when struck by a misaligned pre-assembly being lowered to the level of the platform.

As indicated above, the support frame comprises a plurality of mounting interfaces that serve to secure the units of the electrolyser array to the support frame. Each electrolyser array unit - i.e. each container - can be very heavy and may therefore present a hazard to personnel during lifting procedures, for example in the array pre-assembly stage ir during a module replacement procedure. Therefore, in a particularly preferred embodiment of the invention, a unit guide is constructed as a robust block with at least one surface that slopes downward and inward, and is arranged so that the lower edge of a sloped surface - when viewed from above - appears to lie on a corresponding section of the intended footprint of the electrolyser array unit. During the lowering procedure, any misalignment of the electrolyser array unit with its intended footprint on the support frame is corrected by the unit guides, since their sloping surfaces will "nudge" the electrolyser array unit towards its correct position over its intended footprint. For example, four unit guides may be temporarily secured to the support frame at the four corners of the intended footprint of a container, and each unit guide is shaped to receive a corner of an electrolyser array unit and guide it to its intended position on the support frame. For example, four unit guides can be shaped to "catch" the corners of a container being lowered into place onto the support frame, and to guide or nudge the corners towards the correct positions.

In a further preferred embodiment of the invention, a mounting interface comprises a locking means adapted to engage with an electrolyser array unit. For example, a unit locking means might be realised to engage automatically with the electrolyser array unit. The locking mechanism may be constructed in such a way that the weight of the container activates the locking mechanism. Alternatively, a locking means may comprise a mechanism than can be activated remotely. In a further preferred embodiment of the invention, a locking means can comprise a twistlock arranged to engage with a corner casting of the container of an electrolyser array unit. For example, the support frame and container may comprise complementary elements of a standardized rotating connector system such as a twistlock.

The support frame can comprise a suitable a lifting interface to facilitate connection to a crane or other lifting apparatus during assembly of the offshore electrolyser array.

The support frame can have any shape. However, since it is straightforward to arrange units of an electrolyser array side by side, the support frame may be assumed primarily to have a rectangular shape. The size of the support frame will depend on the maximum number of units that it will carry, for example a support frame for four electrolyser units may be slightly larger than an array of four such electrolyser units.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figures 1 - 4 show stages of the inventive method;
Figure 5 shows a pre-assembled array;
Figure 6 illustrates a replacement procedure;
Figure 7 shows a further embodiment of the inventive support frame.
Figure 8 shows an alternative realisation of a container unit guide 1G20 used to guide a container C into place between two other containers C on a support frame 1F.
Figure 9 shows an alternative realisation of a frame guide 1G3.

In the diagrams, like numbers refer to like objects throughout. Objects in the diagrams are not necessarily drawn to scale.

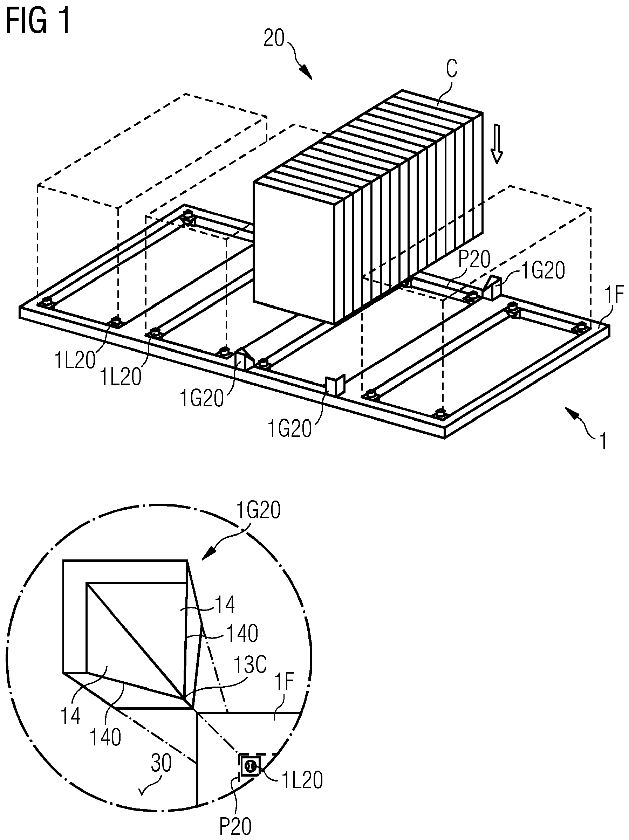

Figures 1 - 4 illustrate various stages in the inventive method. In Figure 1, an embodiment of the inventive support frame 1F has been constructed. The support frame 1F is realised to hold four units of an electrolyser array. Each unit 20 comprises one or more electrolyser modules inside a container C, for example a standard shipping container. One such container C is about to be lowered onto the support frame 1F using a crane (not shown). In a factory setting, the container C can be lowered in a straightforward fashion onto the support frame 1F, and a nearby technician can control the crane using a hand-held remote control unit, for example. However, even slight oscillation of the suspended load 20 cannot be avoided, making it difficult to align the load 20 with precision over its intended footprint P₂₀. This aspect is even more relevant if the support frame 1F is to be loaded with containers 20 in an outdoor setting (e.g. on the deck of an installation vessel, on a quay of a shipping port, etc.), wind can cause the load to oscillate, making the assembly procedure hazardous and more costly. In this exemplary embodiment, the step of loading the support frame 1F can be made safer by guiding the container C using appropriately-shaped guides. The diagram indicates container guides 1G20 of the support frame 1F. These serve to "nudge" the container C of a downward-moving electrolyser array unit 20, helping it into place at its intended position P₂₀.

Such a container C may comprise corner castings of a standardized rotating connector system. The guides 1G20 are arranged so that the container is positioned correctly, with each of its corner castings in place over a corresponding connector, for example a twistlock 1L20.

The support frame 1F may be manufactured from a suitably robust material such as structural steel, for example by casting. Similarly, the unit guides 1G20 may be manufactured from steel. The unit guides 1G20 may be permanently welded or otherwise secured to the support frame 1F. Preferably, as shown here, the unit guides 1G20 can be detachable. In this way, a set of four unit guides 1G20 can be placed as required when a container C is lowered onto the support frame 1F, and then placed to assist in guiding the next container. Each unit guide 1G20 has two sloped surfaces 14 with outer edges 140 that converge at a point which coincides with an outer corner of the footprint P20 when the guide is 1G20 placed correctly.

This stage of assembly can be completed at an onshore facility and then lifted onto the deck of an installation vessel. Alternatively, the pre-assembly 12 can be prepared directly on the deck of an installation vessel.

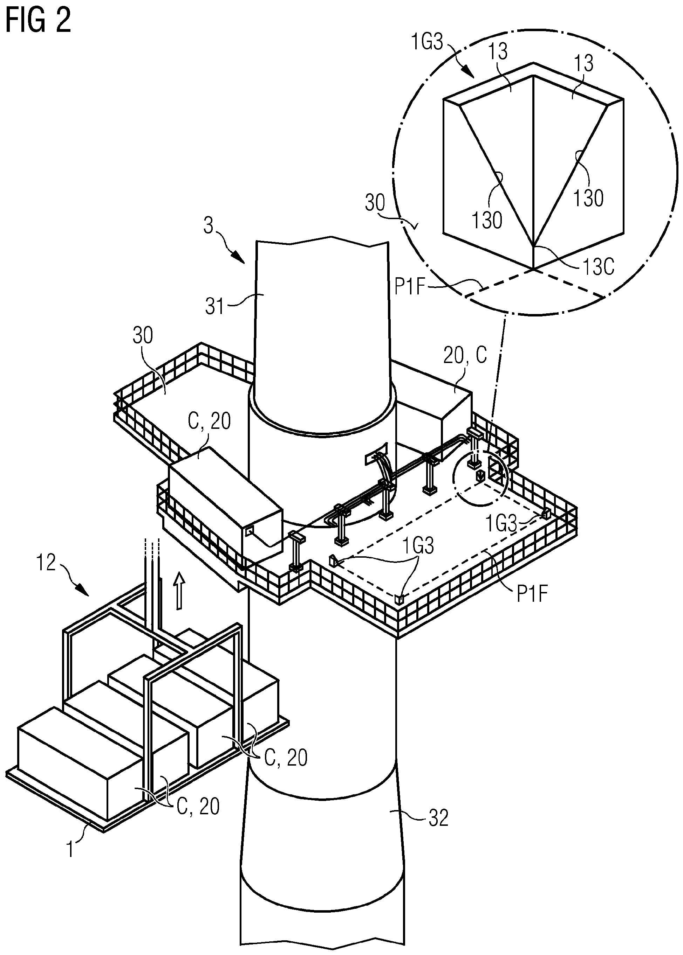

Figure 2 shows a complete pre-assembled array 12, with four containers C (i.e. four electrolyser array units 20) in place on the support frame 1F, being lifted as a single entity. The pre-assembly 12 has been transported to its offshore installation site, in this case an offshore wind turbine 3 which has a platform 30 at the interface between support structure 32 and tower 31 (the sea is not shown, but it shall be understood that the support structure 32 is installed on the seabed). The pre-assembled array 12 is to be installed on the platform 30 of the wind turbine 3, and the diagram shows an arrangement of pipes in place for connection to the units of the pre-assembly 12. Two other units are already in place on either side of the tower 31 and have been connected to pipelines.

The platform 30 has been prepared by mounting frame guides 1G3 in a precise configuration in order to receive the corners of the support frame 1F of the pre-assembled array 12. The frame guides 1G3 can be connected to the platform 30 by a suitable mounting/locking system, for example a twistlock system. Each frame guide 1G3 is essentially block-shaped, with two sloping triangular faces 13 that share an edge between an upper corner and a lower "target" corner 13C. The outer edges 130 of the sloping faces 13 converge at this corner 13C. Four frame guides 1G3 are secured to the platform 30 such that their four target corners 13C are placed at the four corners of the "footprint" P_{1F} of the support frame 1F. As the loaded support frame 1F is lowered into place towards the platform 30, wind may cause it to oscillate. However it is sufficient for a sloping face 13 of one or two of the frame guides 1G3 to initially "catch" the support frame 1F, and these sloping faces will compel or "nudge" the support frame 1F towards the correct centred position or footprint P_{1F}. Ultimately, the sloping faces 13 of the four guides 1G3 will help move the array 12 onto its intended position on the platform 30, i.e. the frame guides 1G3 will guide or "nudge" the misaligned support frame 1F to its correct target position P_{1F} as it is lowered towards the platform 30.

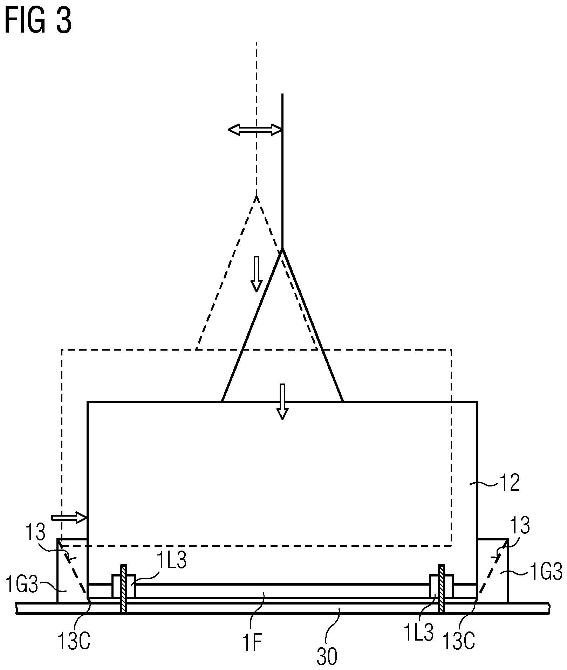

This is indicated in Figure 3, which shows a pre-assembled array 12 being lowered by crane (not shown) onto the platform 30. The pre-assembly 12 (several containers C secured to the support frame 1F) is indicated for the sake of clarity by a rectangular outline. The dotted lines indicate an initial position of the pre-assembled array 12 as it reached the tops of the frame guides 1G3. While being lowered towards the platform 30, the load may be displaced laterally by wind as indicated by the side-to-side horizontal arrow D_{wind}. When a frame guide 1G3 "catches" a lower corner of the pre-assembled array 12, the sloping faces of the guide 1G3 will displace the array 12 sideways as indicated by the horizontal arrow D_{nudge} to move towards its intended position P_{1F} on the platform 30. The frame guides 1G3 therefore make the installation procedure significantly safer, since it is not necessary for personnel to be present on the platform 30 during the hazardous positioning of the very heavy electrolyser array units 20. Together, the support frame 1F and the frame guides 1G3 make the installation procedure favourably quick, since an entire electrolyser array 2 can be placed on the platform 30 in a single procedure. The diagram also indicates an exemplary realisation of a frame locking means 1L3 which will engage with the support frame 1F once this has reached its correct position. Here, frame lock 1L3 is in the form of a rod that extends from the platform 30 into a corresponding bushing of the support frame. The rod and bushing can be essentially straight cylindrical elements. To avoid jamming, the rod and bushing preferably have a conical or tapered shape. A cotter pin can be used to secure the rod and bushing of the frame lock 1L3 described above.

Additionally, a moveable locking arm or similar can be provided, which can automatically engage with the support frame, or can be actuated from a remote location. Alternatively or in addition, the frame locking means 1L3 can be actuated manually.

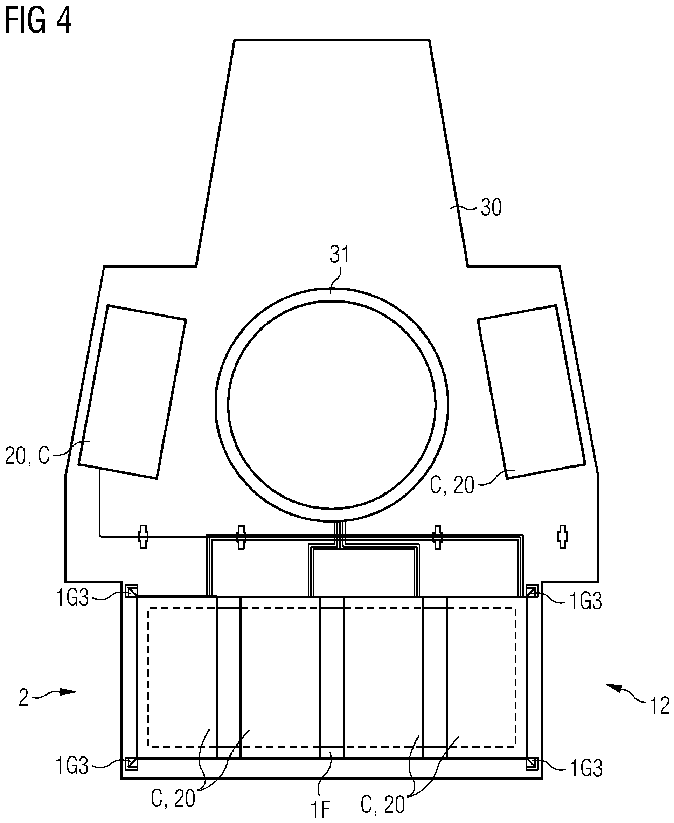

Figure 4 is a simplified plan view to illustrate a final stage of installation using the inventive method. Here, the electrolyser array 2 comprises four units 20 of a pre-assembly 12 as described above, as well as two further units 20 placed on either side of the tower 31. The diagram shows four frame guides 1G3 on the platform, used to assist in positioning the pre-assembly 12 as explained above. These can be removed at a later stage by personnel, or can remain in place. Cables and pipes of the electrolyser array 2 have been connected to corresponding cables and pipes at the platform level, so that the wind turbine 3 can power the array 2 which can commence generation of hydrogen, for example by PEM electrolysis. The "green" hydrogen gas can be fed into an export pipeline.

The overall size of a guide 1G3, 1G20 may depend on the intended application. For example, guides 1G3, 1G20 that will be used in severe weather conditions (high seas and high winds) may be larger, since greater oscillations of a suspended loads may be expected.

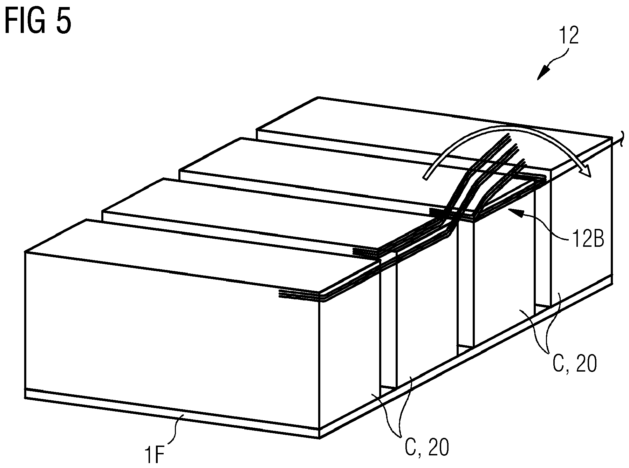

Figure 5 shows a four-unit pre-assembly 12, and indicates a connector bundle of infrastructure cables and pipes. For example, the connector bundle of the pre-assembly 12 may comprise a single water infeed pipe, a single power supply cable, and a single hydrogen export pipe. Distribution of the water infeed and power supply over the four units 20 has already been done at the pre-assembly site. Similarly, the four hydrogen outlets of the units 20 have already been connected to the single hydrogen export pipe for connection to an export pipeline of the wind turbine. In this way, the on-site installation effort is kept to a very favourable minimum.

Alternatively, the bundle can comprise a water infeed pipe, a power supply cable and a hydrogen export pipe for each of the units 20. Each pipe or cable can already have the required length for connection to a corresponding pipe/cable provided at the platform.

The installation bundle 21B is prepared at the pre-assembly site. Before leaving the pre-assembly site, the bundle 12B is placed into a transport position, for example folded back to lie on top of the pre-assembly 12, or inserted into the space between two adjacent units 20. In this way, the cables and pipes of the bundle 12B are protected from damage. After installation at the platform 30 of an offshore wind turbine, personnel can "unfold" the bundle 12B and proceed to connect the pre-assembly 12 to corresponding pipes and cables of the offshore wind turbine.

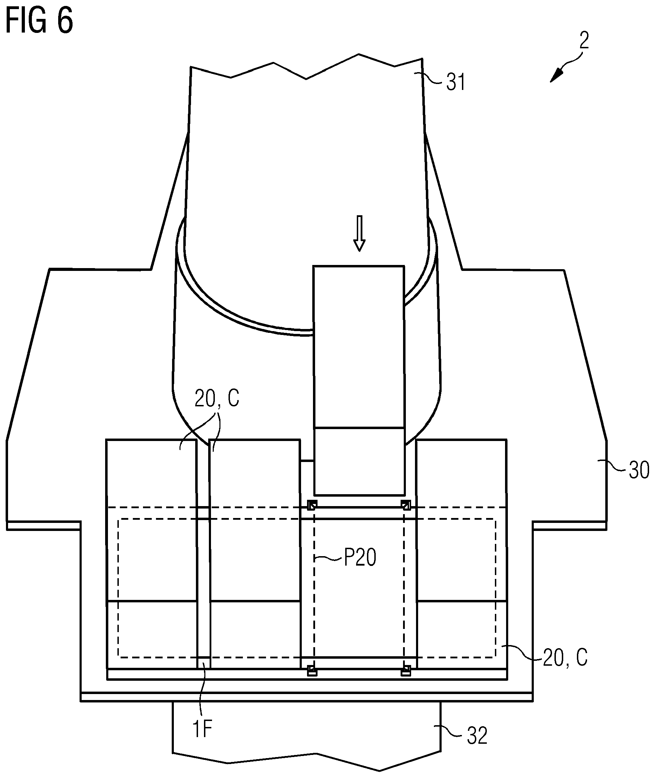

Figure 6 illustrates a replacement procedure carried out sometime during the lifetime of the offshore electrolysis plant. A single electrolyser array unit 20 has been removed and is to be replaced by a new unit 20 installed in a container C as described above. Again, a crane (not shown) is used to hoist the replacement unit 20 towards the platform 30 and downwards towards the support frame 1F. In this case, the replacement unit 20 must be positioned between two neighbouring units of the array 2. To this end, unit guides 1G20 have been placed on the support frame 1F. These unit guides 1G20 act to "nudge" the replacement unit 20 to its correct position P₂₀. Again, it is not necessary for personnel to be present on the platform during this hazardous step. The shape of the unit guides 1G20 may be similar to the guides 1G3 described above, with sloped faces to nudge the container C to its intended position.

In the case of a rotating connector system, personnel can have previously opened the twistlock levers incorporated in the support frame 1F to permit removal of the container of the older electrolyser array unit, and can return to the platform in order to turn the twistlock levers in the corner castings of the new container C to the "locked" positions.

In an embodiment with automatic locking means, the automatic locks will engage with the body of the container without any need for personnel to carry out this task. These automatic locks will have been opened previously to facilitate removal of the older electrolyser array unit.

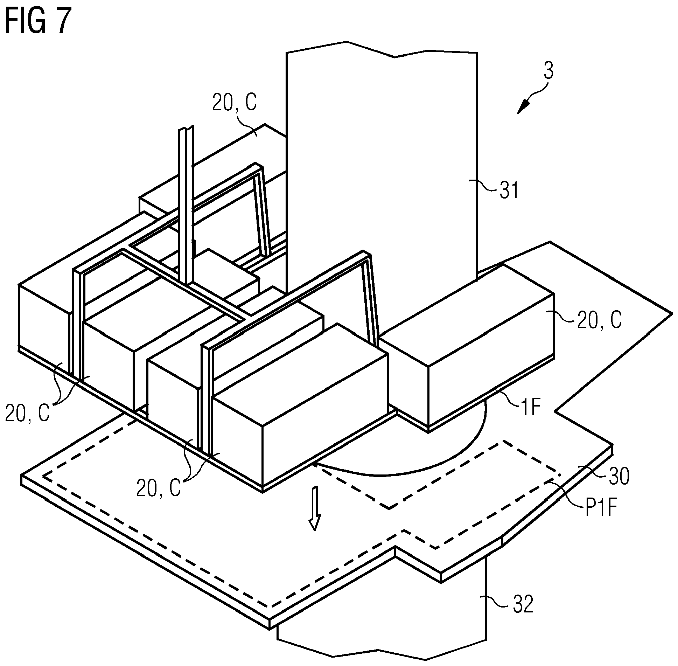

Figure 7 illustrates another embodiment. In this case, the support frame 1F is realised to carry six electrolyser array units 20, and the 6-unit pre-assembly 12 is being lowered into place on the platform 30 of an offshore wind turbine 3.

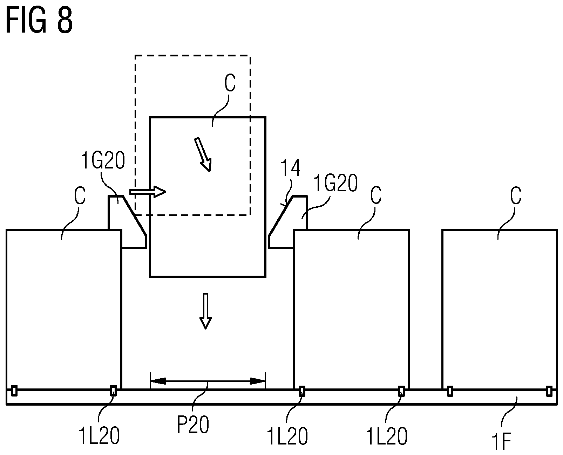

Figure 8 shows an alternative realisation of a container unit guide 1G20 used to guide a container C into place between two other containers C on a support frame 1F. Two or more such guides 1G20 can be arranged on the long edges of the neighbouring containers, so that when a replacement container is lowered into place, it will not damage the neighbouring containers even if wind causes the suspended container to oscillate. The guides 1G20 have sloped faces that are shaped so that the replacement container will be lowered to the correct positon on the support frame, for example to align matching twistlock elements of the support frame 1F and container C.

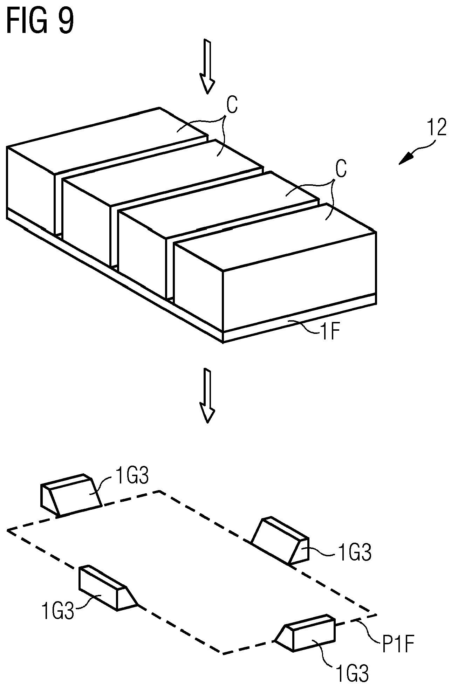

Figure 9 shows an alternative realisation of a frame guide 1G3. Here, four guides 1G3 are arranged along the edges of a target outline for the support frame 1Fof an array 12, so that when the array 12 is lowered into place as shown here, it will be guided into place onto the target footprint P_{1F}. The guides 1G3 are essentially large blocks, each with a large sloped face.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A method of assembling an offshore electrolyser array (2), which method comprises the steps of
- constructing a support frame (1F) to receive a plurality of units (20) of the electrolyser array (2);
- mounting the units (20) onto the support frame (1F) to obtain a pre-assembled array (12);
- transporting the pre-assembled array (12) to its offshore destination (3); and
- lifting the pre-assembled array (12) into place at the offshore destination (3).

2. A method according to claim 1, wherein the units (20) of the electrolyser array (2) are mounted onto the support frame (1F) at a pre-assembly site.

3. A method according to any of the preceding claims, wherein a unit (20) of the electrolyser array (2) comprises a number of electrolyser modules arranged in a standard shipping container (C).

4. A method according to any of the preceding claims, wherein the step of lifting the pre-assembled array (12) into place at the offshore destination (3) comprises the steps of
- arranging frame guides (1G3) on a platform (30) of the offshore destination (3) to receive the support frame (1F);
- lowering the pre-assembled array (12) towards the frame guides (1G3); and
- lowering the pre-assembled array (12) further to reach the platform (30).

5. A method according to any of the preceding claims, comprising the steps of
- removing a unit (20) from the support frame (1F) of a previously installed electrolyser array (2);
- arranging unit guides (1G20) to receive a replacement unit (20); and
- lowering the replacement unit (20) towards the unit guides (1G20); and
- lowering the replacement unit (20) further to reach the support frame (1F).

6. An array assembly toolkit (1) for mounting multiple electrolyser units (20) in a pre-assembled array (12), which array assembly toolkit (1) comprises
- a support frame (1F) adapted to receive a plurality of units (20) of an electrolyser array (2);
- a number of unit guides (1G20), wherein a unit guide (20) is shaped to receive a suspended electrolyser array unit (20) and to guide that electrolyser array unit (20) to its intended footprint (P₂₀) on the support frame (IF); and/or
- a number of frame guides (1G3), wherein a frame guide (1G3) is shaped to receive a suspended support frame (1F) and to guide that support frame (1F) to its intended footprint (P_{1F}) at the installation site of the electrolyser array (2).

7. An array assembly toolkit according to claim 6, wherein a frame guide (1G3) comprises a sloped surface (13) arranged outside the intended footprint (P_{1F}) of the support frame (IF), and wherein an outer edge (130) of the sloped surface (13) aligns with the intended footprint (P_{1F}) of the support frame (1F).

8. An array assembly toolkit according to any of claims 6 to 7, wherein a frame guide (1G3) is realised for mounting to a platform (30) of an offshore wind turbine (3).

9. An array assembly toolkit according to any of claims 6 to 8, wherein a unit guide (1G20) comprises a sloped surface (14) arranged outside the intended footprint (P₂₀) of the electrolyser array unit (20), and wherein an outer edge (140) of a sloped surface (14) aligns with a portion of the intended footprint (P₂₀) of the electrolyser array unit (20).

10. An array assembly toolkit according to any of claims 6 to 9, wherein the support frame (1F) is adapted for connection to a lifting apparatus during assembly of an offshore electrolyser array (2) using the method according to any of claims 1 to 5.

11. An array assembly toolkit according to any of claims 6 to 10, wherein the support frame (1F) comprises a number of unit locking means (1L20), wherein a unit locking means (1L20) is adapted to engage with an electrolyser array unit (20).

12. An array assembly toolkit according to claim 11, wherein a unit locking means (1L20) is realised according to a standardized rotating connector system.

13. An array assembly toolkit according to any of claims 6 to 12, comprising a frame locking means (1L3) adapted to engage with the support frame (1F).

14. An array assembly toolkit according to claim 13, wherein the frame locking means (1L3) engages automatically with the support frame (1F).

15. An offshore wind turbine (3) comprising
- a tower (31) mounted on an offshore support structure (32) ;
- a platform (30) at the junction of tower (31) and support structure (32), adapted to comprise a mounting interface () configured to receive a number of frame guides (1G3) arranged to define the desired footprint (P_{1F}) of a pre-assembled array (12); and- a pre-assembled array (12) of electrolyser units (20) installed using the method according to any of claims 1 to 5, and wherein the support frame (1F) of the pre-assembled array (12) is secured to the platform (30).
